Europäisches Patentamt

European Patent Office

Office européen des brevets

(11) Publication number: **0 415 834 A2**

# EUROPEAN PATENT APPLICATION

(21) Application number: **90402365.2**

(22) Date of filing: **24.08.90**

(51) Int. Cl.5: **G11B 20/10, G11B 20/14**

(30) Priority: **31.08.89 JP 225318/89**
**22.09.89 JP 247829/89 U**
**18.12.89 JP 145581/89 U**

(43) Date of publication of application:
**06.03.91 Bulletin 91/10**

(84) Designated Contracting States:
**DE FR GB**

(71) Applicant: **SONY CORPORATION**
**7-35, Kitashinagawa 6-chome Shinagawa-ku**
**Tokyo(JP)**

(72) Inventor: **Yamagami, Tamotsu**
**c/o Sony Corporation, 7-35 Kitashinagawa**
**6-chome**
**Shinagawa-ku, Tokyo(JP)**
Inventor: **Sako, Yoichiro**
**c/o Sony Corporation, 7-35 Kitashinagawa**
**6-chome**
**Shinagawa-ku, Tokyo(JP)**

(74) Representative: **Thévenet, Jean-Bruno et al**
**Cabinet BEAU DE LOMENIE 55 rue**
**d'Amsterdam**
**F-75008 Paris(FR)**

(54) **Signal reproducing apparatus.**

(57) A signal reproducing apparatus in which the edges of reproduced signals obtained from a recording medium are detected and the signals converted from analog to digital signals (2) in time with sync clock signals. The difference (B) between the current sampled digitized signal and the preceding sampled digitized output signal is generated (34), and the absolute value of the difference output is compared with a predetermined threshold value by a comparator (6) and converted into an output binary form signal for providing accurate output data without deteriorating the S/N characteristics. Compensation may be made for a modulated waveform which is not DC-free, and processing may be done in the digital domain.

**FIG.2**

EP 0 415 834 A2

# SIGNAL REPRODUCING APPARATUS

## Background of the Invention

### Field of the Invention

This invention relates to a signal reproducing apparatus for reproducing signals recorded on a signal recording medium, and more specifically to such an apparatus which can automatically correct errors which occur in reproducing signals recorded by edge, or so-called NRZ, recording.

### Related Art Statement

Heretofore, in making a high density recording on a signal recording medium, such as an optical recording medium or a magnetic recording medium, edge recording, such as so-called NRZ recording, has been frequently used.

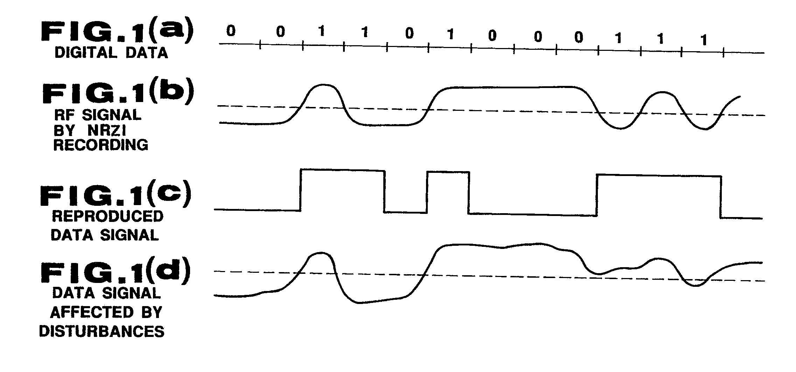

In NRZ I recording, which is a kind of such edge recording, the recording is made so that, with the sample digital data shown at (a) in Fig. 1, the waveform is reversed at the center of a "1" interval, as shown by an RF (high frequency) signal shown at (b) in Fig. 1. It is the rising edge from "L" (low level) to "H" (high level) or the falling edge from "H" to "L" in the waveform that carries the information.

When a signal is formed by edge recording on a magnetic recording medium, the waveform is reproduced after differentiation by, for example, a transformer type head.

On the other hand, when a signal formed by edge recording on an optical recording medium 1, such as a magneto-optical recording medium, is reproduced, the DC component is also reproduced so that the RF signal is output with the same waveform shown at (b) in Fig. 1.

To decode these reproduced RF signals into the original data string with a conventional reproducing apparatus, the reproduced RF signal level is compared to a predetemined dc threshold, as indicated by the broken line at (b) in Fig. 1 and the signal edges are then detected to find the "1" intervals to produce the decoded data string in the NRZ representation as shown at (c) in Fig. 1.

However, if the DC component contains fluctuations these are superimposed on the reproduced RF signals, as indicated at (d) in Fig. 1. Since the threshold value is fixed at the predetermined level, edge detection cannot be performed accurately. Thus, it becomes necessary to perform a processing operation which includes detecting the envelope of the reproduced RF signal, and causing corresponging changes in the threshold signal level. The result is incresed size of the analog circuit.

In another conventional signal reproducing apparatus, the reproduced RF signals shown at (b) in Fig. 1 are differentiated twice and the zero-crossing points detect the rising or falling signal edges. However, differentiation often results in unnecessary noise components in the high frequency range so that the S/N characteristics deteriorate due to the two differentiating operations.

## Object and Summary of the Invention

In view of the foregoing, it is a principal object of the present invention to provide a signal reproducing apparatus by which reproduced data signals may be output accurately by a simplified small-sized analog circuit without deteriorating the S/N characteristics.

The present invention provides a signal reproducing apparatus adapted for detecting the edges of the reproduced signals obtained from the recording medium, said apparatus comprising clock reproducing means for reproducing sync clock signals from said recording medium, analog to digital converting means to convert the analog reproduced signal to a digital signal by sampling at a rate provided by the sync clock, difference output means for outputting the difference between the output signal from said analog to digital conversion means and an output signal delayed by one sampling period from said output signal and comparing means for comparing the output signal from said difference output means with a predetermined threshold to produce binary signals.

With the signal reproducing apparatus in which the RF signal is sampled by sync clock signals to produce a differential output for each sample, and in which the absolute value of the differential output is processed into binary output signals by comparing means, accurately reproduced data signals may be output without deteriorating the S/N characteristics even though the level of the data signal is disturbed or fluctuates due to noise components close to the DC components of the RF signals.

The features and advantages described in the specification are not all inclusive, and particularly, many additional features and advantages will be apparent to one of ordinary skill in the art in view of the drawings, specification and claims hereof. Moreover, it should be noted that the language used in the specification has been principally selected for readability and instructional purposes, and may not have been selected to delineate or circumscribe the inventive subject matter, resort to the claims being necessary to determine such inventive subject matter.

Description of the Drawings

Fig. 1 is a timing chart for a conventional signal reproducing apparatus.

Fig. 2 is a block diagram of one embodiment of the signal reproducing apparatus of the present invention.

Fig. 3 shows an example of a recording format on a magneto-optical recording medium.

Fig. 4 is a block diagram showing a sync clock generating circuit that can be used in the signal reproducing apparatus shown in Fig. 2.

Fig. 5 is a timing chart for the signal reproducing apparatus shown in Fig. 2.

Fig. 6 shows the frequency characteristics of the signal reproducing apparatus shown in Fig. 2.

Fig. 7 is a block diagram showing another embodiment of the signal reproducing apparatus of the present invention.

Fig. 8 is a timing chart for the signal reproducing apparatus shown in Fig. 7.

Fig. 9 is a circuit diagram showing a more detailed construction of the signal reproducing apparatus shown in Fig. 7.

Fig. 10 is a block diagram showing another embodiment of the signal reproducing apparatus of the present invention.

Fig. 11 is a timing chart for the signal reproducing apparatus shown in Fig. 10.

Detailed Description of Preferred Embodiment

Figures 1 through 11 of the drawings depict various preferred embodiments of the present invention for purposes of illustration only. One skilled in the art will readily recognize from the following discussion that alternative embodiments of the structures and methods illustrated herein may be employed without departing from the principles of the invention described herein.

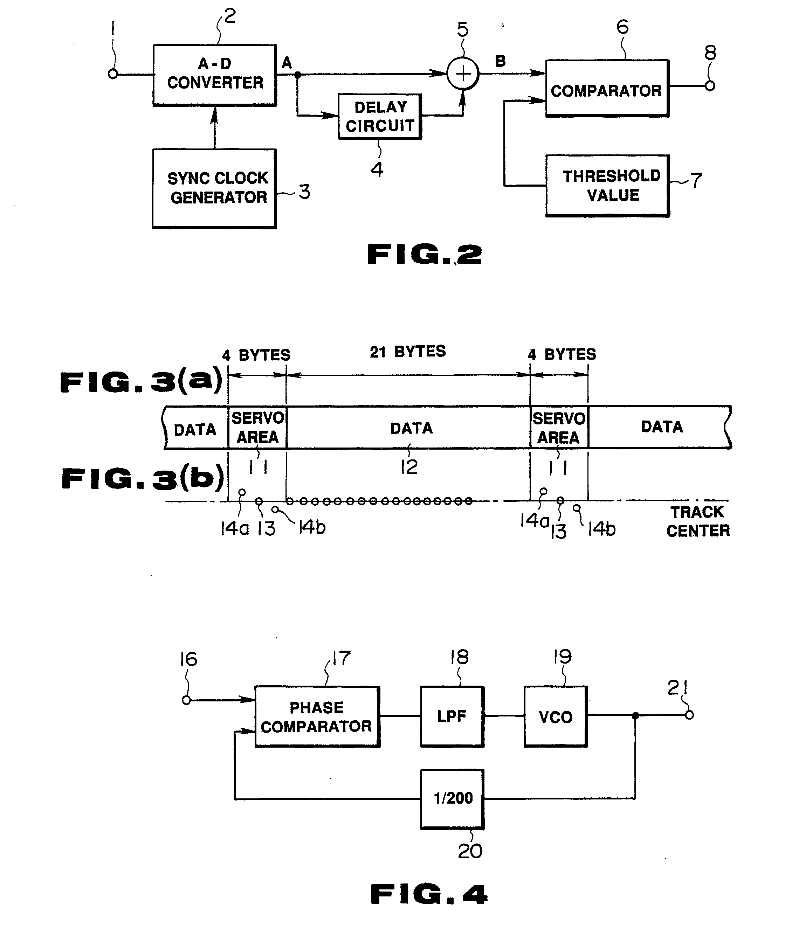

A first embodiment of the signal reproducing apparatus of the present invention is hereinafter explained by referring to Fig. 2.

Fig. 2 is a block diagram of a first embodiment of the signal reproducing apparatus of the present invention, in which reproduced RF signals (high frequency signals) read from, for example, a magneto-optical recording medium, are supplied via input terminal 1 to an A/D converter 2. Sync clock signals from a sync clock generator 3 are also supplied to this A/D converter 2. The sync clock generator 3 can either read or supply sync clock signals recorded on the magneto-optical recording medium.

The output signals from the A-D converter 2 are supplied to an adder 5 and a one-sample delay circuit 4. The signal supplied to this delay circuit 4 is delayed by one sampling period and then supplied to the adder 5 where it is subtracted from the signal supplied directly to the adder 5.

The output signal from the adder 5 is supplied to a comparator 6 to which a threshold value of a predetermined level is supplied from a threshold output circuit 7. The output signal from the comparator 6 is output via output terminal 8.

Fig. 3 is a diagram of the recording format of a given track on a magneto-optical recording medium, and more specifically the recording format of a sampled servo system, which is a kind of an external synchronizing system. As shown at (a) in Fig. 3, 4-byte servo areas 11 and 21-byte data areas 12 are alternated. The servo area 11 shown at (a) in Fig. 3 is formed by a sync clock pit 13 for synchronization which is provided at the track center and servo pits 14a and 14b for tracking which are offset from the track center in opposite directions. A data area 12 is formed between two adjoining servo areas 11. In an alternative known format, the servo area 11 is formed by 2 bytes and the data area 12 is formed by 16 bytes.

To write data signals in the data area 12, the sync clock pit 13 is detected, and 200 sync clock signals, each having a periods T are generated. Data signals are written into the data area 12 at each of the sync clock signals.

Fig. 4 is a block diagram of a specific construction of the sync clock generator 3 which is shown in Fig. 2 and which generates the above mentioned sync clock signals.

In Fig. 4, the sync clock generator 3 is in a so-called phase lock loop (PLL) configuration. The detection signal indicating the detection of the sync clock pit 13 is supplied via input terminal 16 to a phase comparator circuit 17. An output signal from a frequency divider 20 dividing the frequency of the output signal from a voltage controlled oscillator (VCO) 19 by 1/200 is supplied to phase comparator 17 which then compares the phase of the detection signal with that of the output signal from the frequency divider 20 to output the result of comparison. The phase comparison output is passed through a low pass filter (LPF) so as to be free of high frequency noises and output as the sync clock signal at VCO 19. This sync clock signal is taken out at an output terminal 21. The sync clock signal may be used both for writing data signals on the magneto-optical recording medium, and for reading out the data signals.

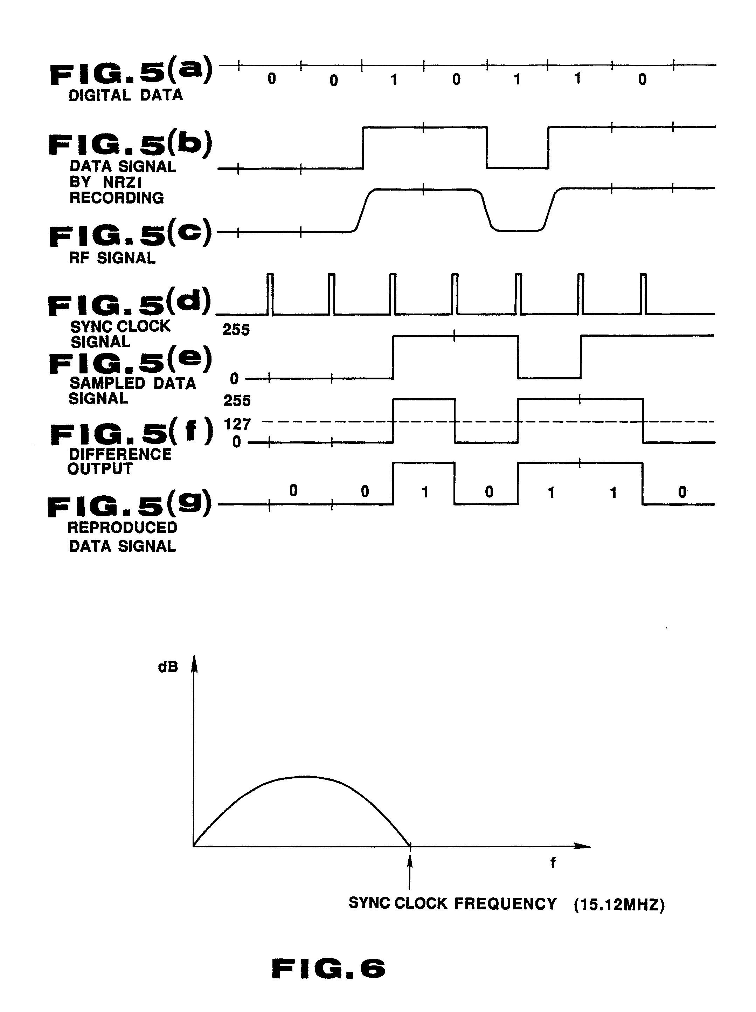

Referring to Fig. 5, the operation of the signal reproducing apparatus shown in Fig. 2 is hereinafter explained.

The data string shown at (a) in Fig. 5, recorded by NRZI recording on the basis of the above mentioned sync clock signals, is as shown at (b) in Fig. 5. These data signals, when written on and read from the magneto-optical recording medium, become the reproduced RF signal, shown at (c) in Fig. 5, which is supplied to the input terminal 1 shown in Fig. 1.

This reproduced RF signal is supplied to the A/D converter 2 which then samples the RF signal shown at (c) in Fig. 5 with the pulse edges of the sync clock signals shown at (d) in Fig. 5. The sampled data signals are converted into digital signals shown at (e) in Fig. 5, for example, into signals 0 to 255 in the case of a 8-bit digital signals, by analog to digital conversion. These digital data signals are supplied to the adder 5, which is in effect a subtractor, and the delay circuit 4. The sample data signals supplied to the delay circuit 4 are delayed by one clock period T before being supplied to the adder 5.

Thus, adder 5 subtracts from each data signal the immediately preceding data signal to produce the absolute value of the difference which is then supplied to the comparator 6 as the difference signal shown at (f) in Fig. 5.

The comparator 6 detects the absolute value of the difference output supplied thereto and discriminates the value of the difference output by a threshold value shown by a broken line (f) in Fig. 5 which is supplied from a threshold output circuit 7. Here, for example, the threshold value is equal to about one half the amplitude of the reproduced RF signal, which is 127 in the case of 8-bit signals. The comparator 6 thus outputs "1" when the difference output level is higher than the threshold value, and "0" when it is lower. In this manner, the reproduced data signal 0010110, which is the same as the original recorded data, may be output, as shown at (g) in Fig. 5.

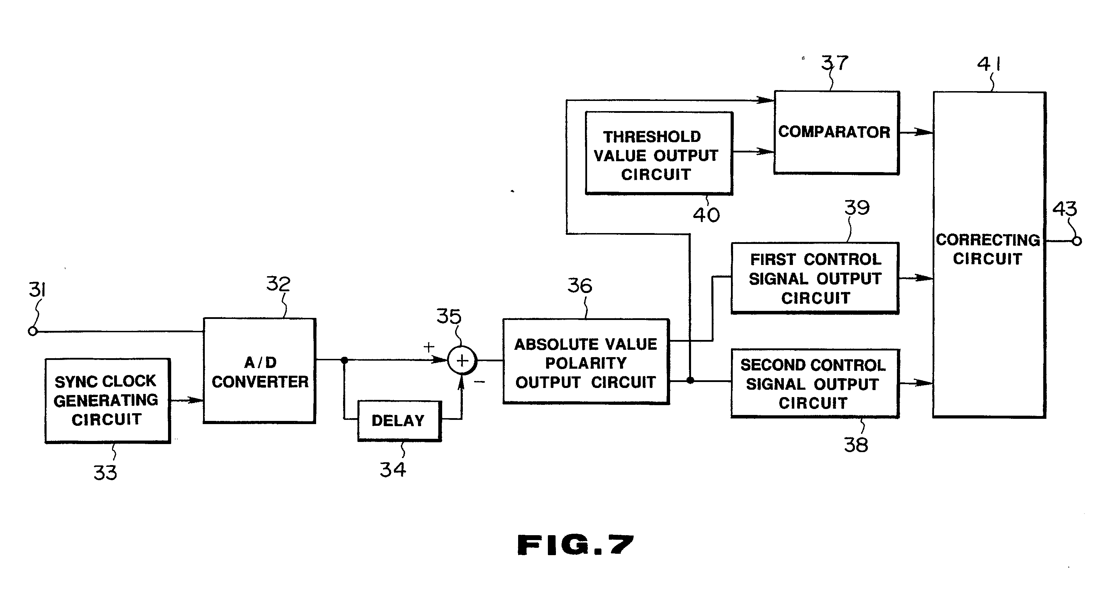

The above described signal reproducing apparatus was produced for trial and tested with the above mentioned sync clock signals at a frequency of 15.12 MHz. It was demonstrated that, as shown in Fig. 6, the frequency characteristics of the sample data signal A, which is the output signal from the A/D converter 2 shown in Fig. 2, the difference signal B, which is the output signal from the adder 5, and the ratio B/A, were highly stable by virtue of the arithmetic operation by the constant sync clock signals, without raising the high frequency noise components.

It will be seen from above that reproduced data signals may be output accurately with the signal reproducing apparatus of the present invention since the input RF signals from the recording medium are sampled by sync clock signals, the difference between the current sampled data and the immediately preceding sampled data is found, and the absolute value of the difference is output in the form of binary signals. The above signal processing may be performed digitally so that adjustment of the processing system is unnecessary and circuit integration becomes feasible. Since analog processing such as the two differentiating steps, discussed above is unnecessary, the S/N ratio may be improved without raising the high frequency noise components while the modulated waveform which is not DC-free may also be handled.

The sampling rate, which generally should be at least twice the signal range in accordance with the Nyquist theorem, may be reduced to less than twice the signal range, or to the level of the signal range, by performing sampling with the sync clock signals as mentioned above.

Further, when reproducing the transmitted signals in general, such as those obtained by reproducing recording pits in the data area 12 of the magneto-optical recording medium, there is no problem when the input signals are transmitted over a broad range, that is, when the recording density of the recording medium is low. However, when the signal is transmitted over a narrow range, that is when data is recorded with high recording density on the recording medium, the waveform becomes more blunted and the least amplitude Dw of the input signal becomes narrow so that the allowance for level discrimination for edge detection is diminished. In this case, in order for the least amplitude Dw to be detected as the edge, it becomes necessary to reduce the threshold value for level discrimination, with the resulting inconvenience that multiple edges are detected in an area of the signal waveform where the input signal waveform is moderately inclined over more than one sample.

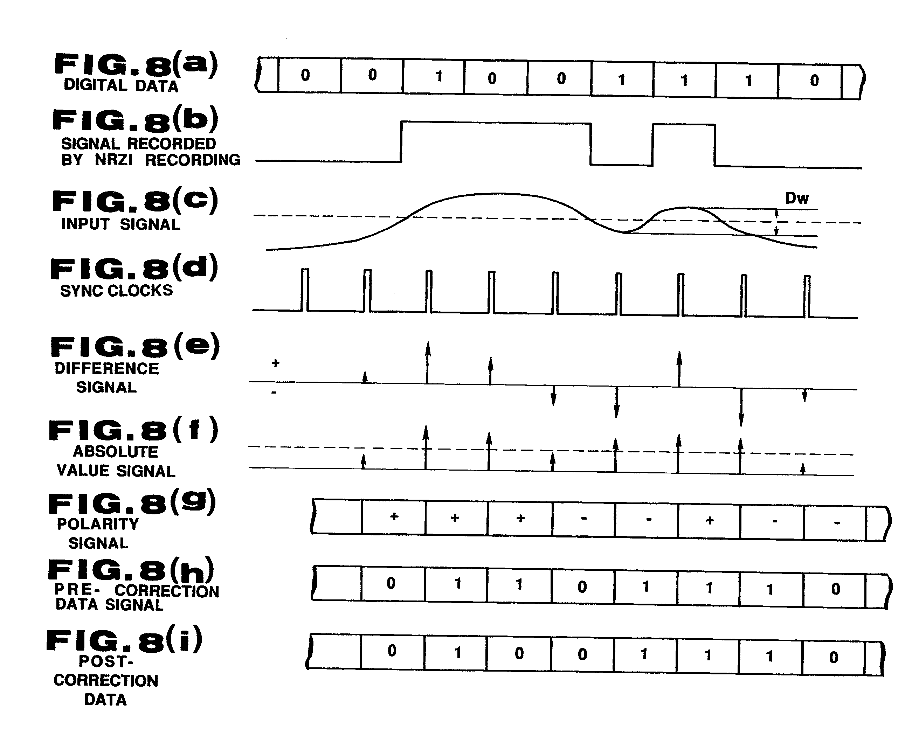

Fig. 7 is a block diagram showing a signal reproducing apparatus for preventing this problem according to a modified embodiment of the present invention, and Fig. 8 is a timing chart showing the original digital data and signal waveforms at various portions of the signal reproducing apparatus shown in Fig. 7.

The input signals read from the magneto-optical disk are input at input terminal 31 to an A/D converter 32. Sync clock signals from a sync clock generator 33 are also supplied to the A/D converter 32. The A/D converter 32 samples the input signals according to the sync clock signals supplied thereto and converts the sampled signals into corresponding digital signals which are transmitted as sampled data signals to an adder 35 and a delay circuit 34.

The data signals supplied to the delay circuit 34 are delayed by, for example, one period of the sync clock from the data signals directly supplied to the adder 35. The adder 35 takes the difference between the current data signal and the delayed data signals and transmits the difference signal to an absolute value/polarity output circuit 36.

This absolute value/polarity output circuit 36 detects the polarity of the difference signal supplied thereto and transmits a polarity signal to a first control signal circuit 39, and detects the absolute value of the difference signal and transmits an absolute value signal to a comparator 37 and a second control signal circuit 38.

A threshold value which is approximately half the level of the input signal is also supplied from a threshold value output circuit 40 to the comparator 37. The comparator 37 causes the absolute value signal supplied thereto to be converted into binary signals by comparison with the threshold value and transmits the binary signals to a correcting circuit 41.

The first and second control signal output circuits 38 and 39 are responsive to the polarity signal and the absolute value signal supplied thereto to supply respective correction signals to the correcting circuit 41. The correcting circuit 41 responds to these correcting signals by correcting the detection signals from the comparator 37 so that the corrected signals are output as reproduced data signals via output terminal 43.

Referring to Fig. 8, the operation of this embodiment of the signal reproducing apparatus is hereinafter explained.

The data string shown at (a) in Fig. 8, which is recorded by NRZI recording as shown at (b) in Fig. 8, is read from a magneto-optical disk and supplied to the input terminal 31 shown in Fig. 7 as the input signal shown at (c) in Fig. 8. This input signal has undergone considerable waveform blunting such that the least amplitude Dw, which is the smallest amplitude of the input signal, becomes so small that the allowance of level discrimination for edge detection is diminished. This input signal is supplied to the A-D converter 32.

The A-D converter 32 samples the input signal with, for example, the pulse edges of the sync clock signal shown at (d) in Fig. 8 and causes the sampled analog signals to be converted into corresponding digital signals, which are then supplied as sampled data signals to the adder 35 and to the delay circuit 34.

The delay circuit 34 delays the sampled data signals supplied thereto by, for example, one period of the sync clock, and transmits the delayed signal to the adder 35. The adder 35 subtracts the delayed data signal from the current data signal and classifies the subtraction signals into " + " and "-" signals, as shown at (e) in Fig. 8, to supply the " + " and "-" as difference signals to the absolute value/polarity output circuit 36.

The absolute value/polarity output circuit 36 detects the absolute value of the difference signal supplied thereto and supplies an absolute value signal, as shown at (f) in Fig. 8, to the comparator 37 and to the second control signal output circuit 38. The circuit 36 also detects the polarity of the difference signal and supplies a polarity signal as shown at (g) in Fig. 8 to the first control signal output circuit 39.

The comparator 37 compares the level of the absolute value signal supplied thereto with the above mentioned threshold value as a reference and outputs "1" if the level of the absolute value signal is higher than the threshold value and "0" if it is lower. Thus the absolute value signal supplied to the comparator is converted into reproduced binary pre-correction data signals, which are supplied to the correction circuit 41. The reproduced pre-correction data at this time is 01101110, as shown at (h) in Fig. 8, in contrast to the original data 01001110 shown at (a) in Fig. 8, i.e. the third data "1" is in error.

The first control signal output circuit 39 detects a succession of the same polarities, such as " + ", " + " or "-", "-", in the polarity signal and transmits such a polarity succession as the first control signal to the correction circuit 41. At the same time, the second control signal output circuit 38 detects the absolute value signal and transmits the detected signal levels to the correction circuit 41 as the second control signal.

When such a succession of same polarities in the reproduced pre-correction data is supplied to the correction circuit 41, the circuit 41 detects, from the second control signal, the greatest absolute value of the absolute value signal having the same polarity. Since there is only one "1" or edge in the data with the same polarity, the correction circuit 41 corrects the reproduced pre-correction data signals supplied from the comparator 37 so that only the absolute value signals having the highest level are considered as a "1" and the remaining signals are considered to be "0". The original data 01001110 is reproduced in this manner as shown at (i) in Fig. 8 and output via output terminal 43.

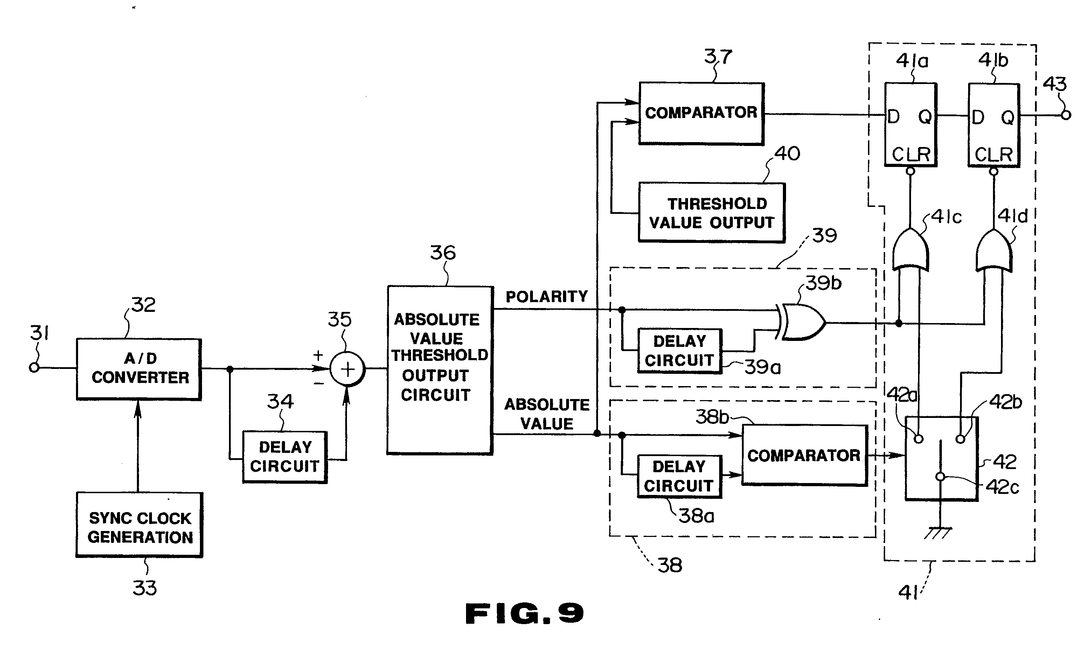

The above mentioned correcting operation is hereinafter explained with reference to a more concrete example, shown in Fig. 9, of the signal reproducing apparatus which is shown in a block diagram of Fig. 7.

In Fig. 9, difference signals $d_1$ and $d_2$ are supplied to the absolute value/polarity output circuit 36. For illustration, the polarity of these signals is assumed to be " + ", " + " with $|d_1| > |d_2|$. The comparator 37 causes these absolute values $|d_1|$ and $|d_2|$ to be converted into binary values, with the threshold value as the reference, and these binary values are output as the reproduced precorrection data signals $D_1$ and $D_2$, which are both "1". The reproduced pre-correction data signal $D_1$ is supplied to a flip flop 41b, while the reproduced pre-correction data signal $D_2$ is supplied to a flip flop 41a.

The polarity signal components " + " and "-" of the difference signal are output as "1" and "0", respectively, and, since the polarity of the difference signal in this case is " + ", " + ", a signal "1" is currently supplied as an input A to an ExOr gate 39b of the first control signal output circuit 39, while a signal "1" is supplied as an input B to the same ExOr gate after a delay of one clock period T introduced by a delay circuit 39a. Since the ExOr gate 39b outputs "0" when both the inputs A and B are "1", this output signal "0" is supplied as the first control signal to OR gates 41C and 41d, which are connected to flip flops 41a and 41b, respectively, as inputs.

The absolute value signal $|d_1|$ is currently supplied to a comparator 38b of the second control signal output circuit 38, while the absolute value signal $|d_2|$ is supplied to the same comparator after a delay of one clock period T introduced by a delay circuit 38a. The comparator 38b compares the levels of the two absolute values supplied thereto to output a second control signal. Since $|d_1| > |d_2|$, the comparator 38b outputs a second control signal which will cause a movable contact 42c of a switch 42 to be shifted to a stationary contact 42a.

The fixed contacts 42a and 42b of the switch 42 are connected to OR gates 41c and 41d, respectively. When the movable contact 42c is shifted to the fixed contact 42a by the second control signal, a signal "0" is supplied as an input to the OR gate 41c, since the other end of the movable contact 42c is grounded, while a signal "1" is supplied to the OR gate 41d. Since the output of the OR gate 41d is "0" when both of the inputs are "0", an output signal "0" is supplied to a reset terminal (clear terminal) of the flip flop 41a. The flip flop 41a is thus reset to correct the reproduced pre-correction data signal $D_2$, which is a "1", to a "0" so that the corrected signal "0" is output at 43. Meanwhile, the reproduced precorrection data signal $D_1$ supplied to the flip flop 41b is output directly.

The correction circuit 41 thus corrects the reproduced data signal in such a manner that, when the polarities of the two absolute value signals $|d_1|$ and $|d_2|$ are the same, the first control signal goes to a low level ("0") to clear the reproduced data signal $D_2$ of the flip flop 41a to "0" when $|d_1| > |d_2|$ while clearing the reproduced data signal $D_1$ of the flip flop 41b to "0" when $|d_1| < |d_2|$.

In this manner, the data signal which has been reproduced incorrectly may be output in the corrected form. The correction circuit 41 determines that only one edge is present to create a "1" and outputs the corrected signal "0" elsewhere in the region of same polarity. Meanwhile, the reproduced pre-correction data signal $D_1$ supplied to the flip flop 41b is output directly. In other words, recognizing that only one edge necessarily exists in the input signal of NRZI recording during the time the polarity of the input signal is being changed gradually in one direction, the signal reproducing apparatus shown in Fig. 9 compares the absolute value level of the signal during the change in polarity, and sets the highest level signal to "1" while correcting the remaining signals to "0" for correctly reproducing the data.

Since effects similar to those of an analog equalizer may be achieved by a digital artifice, it becomes possible to realize circuit integration without the necessity of any special adjustment.

It is noted that the above described construction of the first control signal outputting circuit 39, the second control signal outputting circuit 38 and the correcting circuit 41 is merely illustrative and constructions other than those described above can be used as long as the above described operation is achieved.

With the above described signal reproducing apparatus of the present invention, the reproduced data signal from the comparator is corrected by correcting means to which are supplied a first control signal which reflects the polarity of the output signal from a difference means, and a second control signal which reflects the absolute value of the output signal from the difference means. Thus the incorrectly reproduced data signal may be corrected and output as the correctly reproduced data to realize an effect comparable with that of an analog equalizer by a digital artifice.

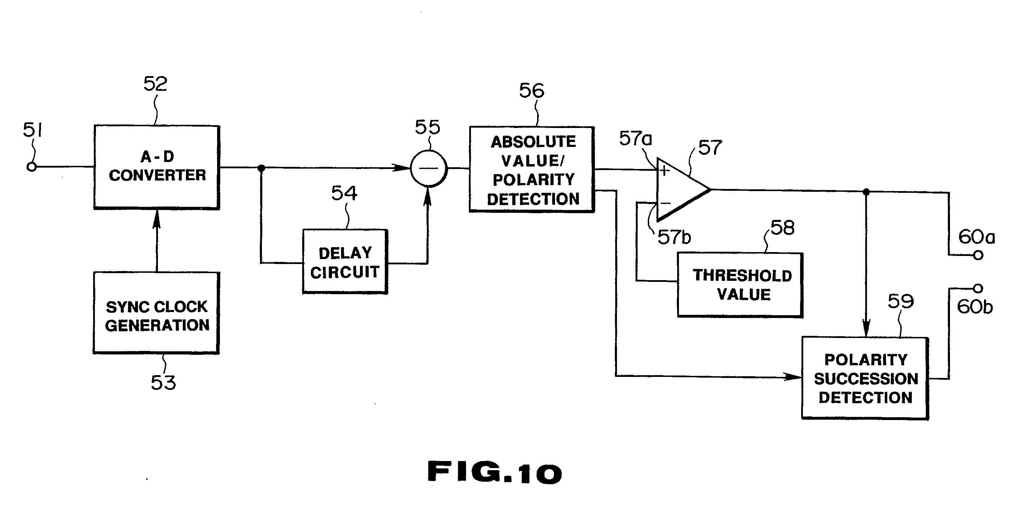

Fig. 10 shows, in a block diagram, a signal reproducing apparatus according to another embodiment of the present invention. The RF (high frequency) signals read from, for example, a magneto-optical recording medium, are supplied via input terminal 51 to an analog to digital converter 52, to which sync clock signals from a sync clock generator 53 as later described are supplied. The output signal from the A/D converter 52 is supplied to a subtractor 55 and a delay circuit 54. The signal supplied to the delay circuit 54 is supplied to a subtractor 55 with a one sample period delay from the signal directly supplied to the subtractor 55, and the difference between the two signals is taken at the subtractor 55. The difference output signal from the subtractor 55 is supplied to an absolute value/polarity detection circuit 56 where the absolute value and the polarity are found. The absolute value signal from the detection circuit 56 is supplied to an input terminal 57a of a comparator 57 functioning as binary signal generating means, whereas the polarity signal is supplied to a polarity succession detection circuit 59. A predetermined level threshold value from a threshold value outputting circuit 58 is supplied to another input terminal of the comparator 57. The output signal of comparator 57 is output via output terminal 60a, and is also supplied to the polarity succession detection circuit 59. The output signal of the polarity succession detection circuit 59 is output at an output terminal 60b as the reproduced control signal.

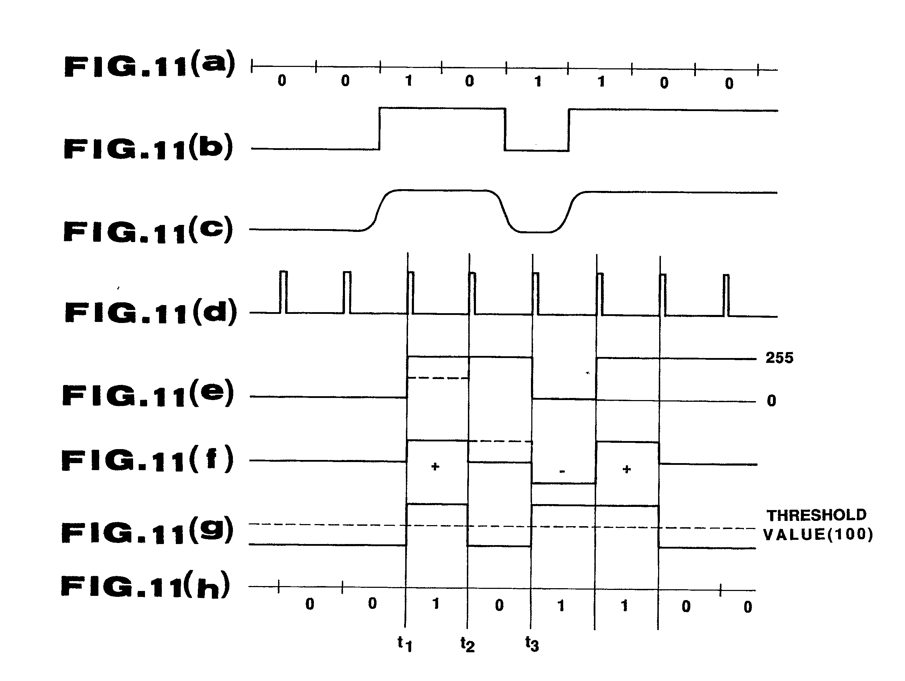

A specific example of the signal supplied to the input terminal 51 of the signal reproducing apparatus shown in Fig. 10 is shown at (c) in Fig. 11. This signal (c) is obtained by converting a data string shown at (a) in Fig. 11 into a recording signal waveform shown at (b) in Fig. 11 after NRZI modulation and recording the signal (b) on a recording medium, for example, a magneto-optical recording medium. The reproduced signal is shown at (c) in Fig. 11. This signal is supplied to the A/D converter 52 as the input signal. The A/D converter 52 samples the input signal (c) by, for example, pulse edges of the sync clock pulses (d) and causes the sampled analog data signal to be converted into corresponding digital signals of, for example, 0 to 255 where the digital signal is the 8-bit digital signal as shown at (e) in Fig. 11. These digital data signals are supplied to the subtractor 55 and to the delay circuit 54.

The sampled data signals supplied to the delay circuit 54 are supplied to the subtractor 55 after a delay of one sampling period, which is introduced by the delay circuit 54. The subtractor 55 subtracts the preceding data signal from the current sampled data signal to find a difference data signal, which is then supplied to the absolute value polarity detection circuit 56.

The detection circuit 56 detects the absolute value and polarity of the above mentioned difference signal, so that the polarity output signal shown at (f) in Fig. 11 is supplied to the polarity succession detection circuit 59, while the absolute value output signal shown at (g) in Fig. 11 is supplied to one input terminal 57a of the comparator 57. The other input terminal 57b receives a threshold value, shown at (g) by a broken line, having a level about half the amplitude of the input signal shown at (c), which is on the order of 100 where the digital signal is a 8-bit signal. The absolute value signal level is discriminated at the comparator 57 with the threshold value as the reference. Thus the reproduced signal "1" or "0" is supplied to the output terminal 60a and to the polarity succession detection circuit 59 when the difference output signal level is higher or lower than the above threshold value, respectively.

The polarity succession detection circuit 59 detects the polarity succession or continuity of the difference signal from the subtractor 55 shown at (f) in Fig. 11 and outputs the reproduced control signal at the terminal 60b when the same polarity is detected continuously.

In the signal shown in Fig. 11, waveform blunting is moderate, and the output waveform after sampling and A/D conversion represents an ideal waveform as shown at (e) in Fig. 11. The signal "+" or "-" appears only at the edges of the polarity detection signal shown at (f) in Fig. 11, with the portion other than the edges being "0". However, in the case of actual reproduced signals, sampled data signals (e) having intermediate values between 0 and 255 are encountered from time to time, so that signals "+" or "-" are also encountered occasionally in portions other than the edges of the polarity detection signals (f). For example, when the signal level assumes an intermediate level between time $t_1$ and time $t_2$, as shown by a broken line (e) in Fig. 11 the difference data at time $t_2$ is of positive polarity with the polarity detection signal between time $t_2$ and time $t_3$ becoming a positive signal, as shown by a broken line at (f) in Fig. 11. So far as the absolute level of the difference output signal in not higher than the above threshold value, the output signal (h) is "0". However, in the case that the same polarity is detected continuously, and the absolute level of the difference output signal is higher than the above threshold value, the output signal data in error because the rising edge of the falling edge occurs continuously. In such case, the polarity succession detection circuit 59 outputs "H", for example, as the reproduced control signal. For this reason, the detection signal from comparator 57 is supplied to the polarity detection circuit 59 so that the operation of polarity succession detection is enabled only when the detection signal is "1". The detection control signal going high, i.e. "H," means that at least an error has occurred. Thus it suffices. to control the reproducing operation in data processing circuits of the succeeding stages. Specifically, correction may be made so that only the first one of continuously output data "1" is recognized as a "1" and the remaining data are set to "0." Alternatively, an error flag may be set on all of the continuously output data "1".

With the above described signal reproducing apparatus of the present invention, polarity succession is detected with respect to the difference output between an edge signal sampled by the syncclock signal and a signal delayed by one sample, i.e. on clock period. Since the rising edge and the falling edge occur alternately on account of the properties of edge recording an the rising edge of the falling edge can never occur continuously, polarity succession of the difference outputs indicates an error. Thus, on detection of polarity succession, the reproduced control signal is output to perform data correction or to set an error flag to improve date reliability of to reproduce the original data more accurately.

From the above description, it will be apparent that the invention disclosed herein provides a novel and advantageous apparatus for reproducing signals recorded on a signal recording medium.

**Claims**

1. A signal reproducing apparatus in which the edges of signals reproduced from a recording medium are detected, comprising
clock detecting means for reproducing sync clock signals from said recording medium;
analog to digital converting means for converting the reproduced signals into corresponding digital signals by sampling at a rate provided by the sync clock signals;
means for generating a difference signal which is the difference between the output digital signal of said analog to digital converting means and the output digital signal delayed by one sampling period; and
comparator means for comparing the difference signal with a predetermined threshold value to convert said difference signal into a binary form signal.
2. The signal reproducing apparatus of Claim 1, further comprising:
first control signal means for generating a first control signal responsive to the polarity of the difference signal;
second control signal means for generating a second control signal responsive to the absolute value of the difference signal; and
correcting means responsive to said first control signal and said second control signal for correcting said binary form signal and outputting a corrected signal.
3. The signal reproducing apparatus of Claim 2, wherein:
the first control signal reflects the polarity succession of the difference signal; and
the second control signal reflects the absolute value of the difference signal.
4. The signal reproducing apparatus of Claim 2 wherein when said first control signal indicates that there is polarity succession of the difference signal, the second control signal indicates which data in the difference signal has the greatest absolute value and the correcting means performs signal correction so that only the data having the greatest absolute value is considered to be a "1" and the remaining data are considered to be "0".
5. The signal reproducing apparatus of Claim 1 further comprising polarity succession detection means which detects the polarity succession of the difference signal and generates a detection control signal indicating the presence of an error in the detected data.

FIG.1(a)
DIGITAL DATA

0   0   1   1   0   1   0   0   0   1   1   1

FIG.1(b)
RF SIGNAL
BY NRZI
RECORDING

FIG.1(c)
REPRODUCED
DATA SIGNAL

FIG.1(d)
DATA SIGNAL
AFFECTED BY
DISTURBANCES

EP 0 415 834 A2

**FIG.2**

**FIG.3(a)**

**FIG.3(b)**

**FIG.4**

EP 0 415 834 A2

**FIG.5(a)**
DIGITAL DATA

0   0   1   0   1   1   0

**FIG.5(b)**
DATA SIGNAL
BY NRZI
RECORDING

**FIG.5(c)**
RF SIGNAL

**FIG.5(d)**
SYNC CLOCK
SIGNAL

**FIG.5(e)**
SAMPLED DATA
SIGNAL

255

0

**FIG.5(f)**
DIFFERENCE
OUTPUT

255
127
0

**FIG.5(g)**
REPRODUCED
DATA SIGNAL

0   0   1   0   1   1   0

dB

SYNC CLOCK FREQUENCY (15.12MHZ)

**FIG.6**

11

**FIG.7**

41 — CORRECTING CIRCUIT — 43

37 — COMPARATOR

39 — FIRST CONTROL SIGNAL OUTPUT CIRCUIT

38 — SECOND CONTROL SIGNAL OUTPUT CIRCUIT

40 — THRESHOLD VALUE OUTPUT CIRCUIT

36 — ABSOLUTE VALUE POLARITY OUTPUT CIRCUIT

35 — (+/−)

34 — DELAY

32 — A/D CONVERTER

33 — SYNC CLOCK GENERATING CIRCUIT

31

**FIG.8(a)**
DIGITAL DATA

| 0 | 0 | 1 | 0 | 0 | 1 | 1 | 1 | 0 |

**FIG.8(b)**
SIGNAL RECORDED
BY NRZI RECORDING

**FIG.8(c)**
INPUT SIGNAL

Dw

**FIG.8(d)**
SYNC CLOCKS

**FIG.8(e)**
DIFFERENCE
SIGNAL

+

-

**FIG.8(f)**
ABSOLUTE
VALUE SIGNAL

**FIG.8(g)**
POLARITY
SIGNAL

| + | + | + | - | - | + | - | - |

**FIG.8(h)**
PRE- CORRECTION
DATA SIGNAL

| 0 | 1 | 1 | 0 | 1 | 1 | 1 | 0 |

**FIG.8(i)**
POST-
CORRECTION
DATA

| 0 | 1 | 0 | 0 | 1 | 1 | 1 | 0 |

EP 0 415 834 A2

FIG.9

**FIG.10**

EP 0 415 834 A2

FIG.11(a)

FIG.11(b)

FIG.11(c)

FIG.11(d)

FIG.11(e)

FIG.11(f)

FIG.11(g)

FIG.11(h)

EP 0 415 834 A2